# EUROPEAN PATENT APPLICATION

(11) **EP 2 072 689 A2**
(43) Date of publication of application: **24.06.2009**
(21) Application number: 08254051.9
(22) Date of filing: 18.12.2008
(51) Int. Cl.: E02D 29/12, E02D 29/14, E03F 5/02, H02G 9/10

(54) **Underground chambers**

(30) Priority: 21.12.2007 GB 0725016
(71) Applicant: Moorland Composites Limited, New Street Biddulph Moor, Stoke-on-Trent ST8 7NL (GB)
(72) Inventor: Moore, Robert David, Biddulph Moor, Stoke-on-Trent ST8 7NL (GB)
(74) Representative: Sales, Robert Reginald

(57) **Abstract**

A chamber element 12 having end walls 24 at a 45° inclination to abut against end walls 24 on adjacent perpendicular chamber elements 12, such that four elements 12 can together define a chamber 10. A step 20 being provided on each element 12 below the top thereof, the step 20 being configured to be able to receive in respective configurations either one of a formation on a similar chamber element 12 mounted on top of the chamber element 12, or an edge of a cover member 14 to close the top of the chamber 10 formed from the elements 12.

## Description

This invention relates to underground chambers, and to champer elements for use in constructing underground chambers.

Underground chambers are used to house installations such as various diameter pipes, fittings and accessories, conduits, ducting, all types of cabling, meter/junction boxes, valves and associated fixtures and fittings. Such chambers are typically constructed from engineering bricks. Engineering bricks are not particularly strong and, because the mortar is mixed by hand and the bricks are laid manually, the construction is time-consuming and expensive and the quality of the installation can be inconsistent. It is also known to use preformed concrete sections for underground chambers but these are unwieldy and difficult to handle, as well as being relatively brittle.

According to the present invention there is provided a chamber element for use in constructing an underground chamber, the element comprising an elongate body having an abutment face at an end thereof, for abutting against a face of an adjacent chamber element to make up the chamber or a part of the chamber, the abutment face being angled at about 45° to the length of the chamber element such that when two cooperating chamber elements are placed with their respective abutment faces adjacent to and in contact with one another, the chamber elements lie at 90° to one another, an inner step being provided on the chamber element spaced below the top thereof, the step being configured to be able to receive in respective configurations either one of a formation on a similar chamber element mounted on top of the chamber element, or an edge of a cover member.

An engagement formation may be provided on the underside of the chamber element which formation is engageable with the inner step of a chamber element located therebeneath. The engagement formation may be configured such that when engaging with the inner step of a chamber element located therebeneath, the underside of the top chamber element sits substantially flat on top of the lower chamber element.

The chamber element preferably includes a locking formation for receiving a locking member, which locking member is selectively engageable with a cover member to retain same on the chamber element. The locking formation preferably includes a recess which can receive part of a locking member. The recess may be located adjacent the abutment face.

The recess may be configured such that a locking member can extend between recesses in two cooperating chamber elements across the angle between the two cooperating chamber elements. The recess may be configured such that a locking member can extend therefrom substantially perpendicular to the adjacent abutment face.

The abutment face of the chamber element made include means for resisting sliding movement relative to the adjacent abutment face of a cooperating chamber element, the means including a projection and/or an indentation for engaging a complementary indentation and/or projection on the face of the adjacent chamber element.

Preferably the face includes a projection and an indentation, for engaging a complementary indentation and projection on the adjacent face.

The projection may be in the form of an elongate rib, which may be generally triangular in section, with the indentation being of complementary shape.

Preferably the abutment face is generally planar, apart from the projection/indentation.

Preferably the chamber element is generally hollow, having one open elongate side. Preferably the open side is located on a side of the chamber element which will form an external side of the resulting chamber. Preferably the chamber element comprises a top wall and a side wall substantially perpendicular to the top wall. The abutment face is preferably perpendicular to the top wall and may be angled, preferably at 135°, to the side wall.

Preferably the chamber element includes a plurality of ribs which extend from the top and side wall, preferably perpendicular to the top and side wall. The ribs may span substantially an entire width of the top wall.

Preferably the chamber element is shaped such that four abutting chamber elements may form four or more sides of a generally rectangular chamber layer.

Preferably the chamber element is shaped such that a plurality of chamber layers may be stacked one on top of another.

Preferably the chamber element comprises a fibre reinforced composite material, preferably consisting primarily of a thermosetting resin, a glass fibre reinforcement and a filler. The material may include between 15 and 50% glass fibre, with fibre lengths being between 12 mm and 50 mm. The material may include between 15 and 30 weight % of thermosetting polyester resin, between 15 and 50 weight % filler and 3 and 10 weight % of other materials.

Preferably the material of the chamber element has a tensile strength of between 65 and 80 MPa and a tensile modulus of between 8.5 and 12.5 GPa.

According to the invention there is further provided a kit of parts for use in constructing an underground chamber, the kit including a plurality of chamber elements according to any of the preceding definitions.

The kit may further include a plurality of junction elements for joining adjacent chamber elements end-to-end, such that the chamber elements are aligned. The kit may include a cover member, which cover member is locatable resting on the inner step of the chamber elements. The cover member may be configured such that when resting on the inner step of the chamber elements, the top of the cover member is substantially flush with the top of the chamber elements.

The kit may include a locking member locatable in recesses in the chamber elements, the locking member being selectively engageable with the cover member to lock same in a closed position. Two locking members may be provided.

According to the invention there is still further provided an underground chamber comprising a plurality of chamber elements according to any of the preceding definitions, the chamber elements being assembled with their abutment faces adjacent to and abutting one another.

The chamber may include a cover member as defined above.

A locking member as defined above may be provided located in respective recesses in the chamber element to selectively lock the cover member in a closed position. Two locking members may be provided.

The underground chamber may comprise a plurality of chamber layers one on top of another, each chamber layer comprising at least four chamber elements in abutment with one another and arranged to form a rectangle.

The or each locking member may be provided in the top chamber layer only.

The locking member may be in the form of a strip of material with a hole therethrough to receive a member extending from the cover member. The locking member may be made of metal.

Embodiments of the present invention will now be described by way of example only and with reference to the accompanying drawings, in which:-
Fig. 1 is a diagrammatic sectional side view of a chamber according to the invention;
Fig. 2 is a diagrammatic plan view of part of the chamber of Fig. 1;
Fig. 3 is a plan view of a component of the chamber of Fig. 1;
Fig. 4 is a side view of the component of Fig. 3; and
Figs. 5 and 6 are respectively disassembled and assembled plan views of further components according to the invention.

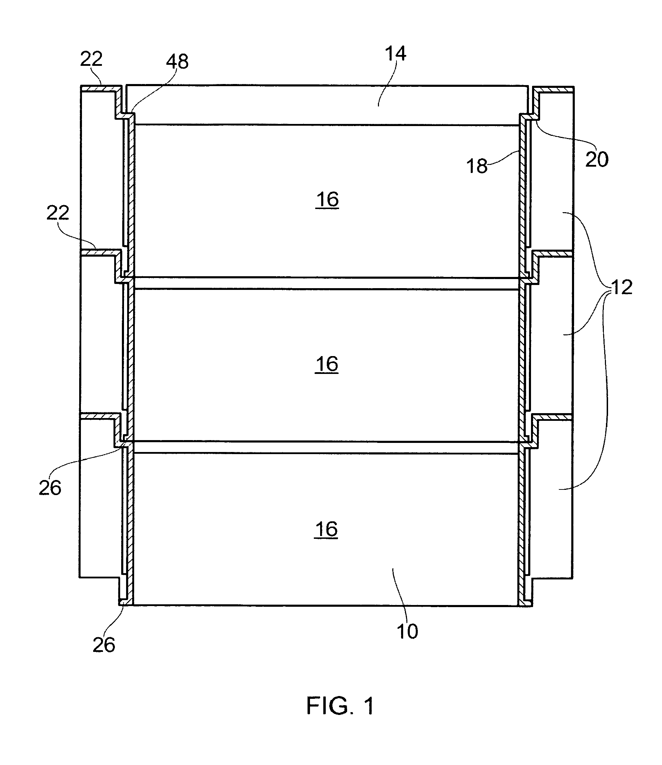

Fig. 1 shows an underground chamber 10 for installation underground to house utilities such as gas and water meters, valves or stopcocks etc. The chamber 10 is formed from a number of chamber elements 12 which together define a hollow arrangement within which the underground utility can be located. A cover 14 closes the top of the chamber 10. The chamber 10 is formed of three square chamber layers 16, each formed from four identical chamber elements 12. Typically the elements could have a length of between 0.5m and 1.5m.

Each element 12 has an inner wall 18 with an outward step 20 towards the top thereof leading to a top wall 22. In plan view each element 12 ends with an inclined end wall 24 at a 45° inclination to the inner wall 18, the end wall 24 defining an abutment face. The end walls 24 are both inclined outwardly from the inner wall 18. The lower end of the inner wall 18 is turned outwardly to define a flange 26, of a size to locate on the step 20.

A pair of vertically extending ribs 28 are provided extending outwardly from the inner wall 18 and connected to the top wall 22. The ribs 28 and outer parts of the end walls 24 terminate above the flange 26 for a distance corresponding substantially to the distance between the step 20 and top wall 22. Fixing holes 30 are provided through each of the inclined end walls 24. An opening 32 is provided through the inner wall 18 between the ribs 28.

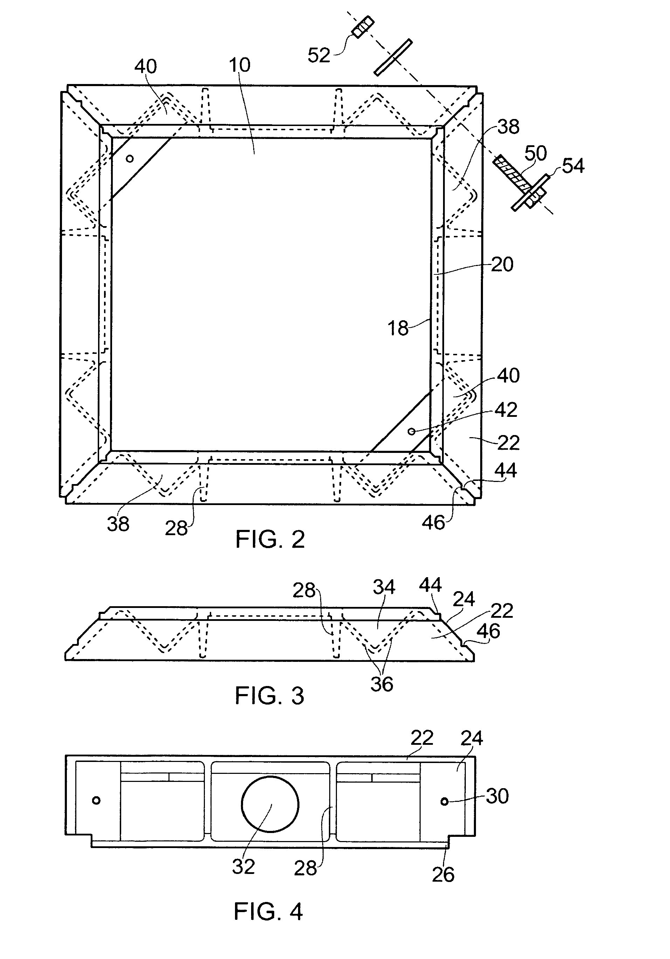

A locking formation in the form of a recess 34 inclined perpendicular to each end wall 24 and extending into the inner wall 18, is provided adjacent each end wall 24, and is defined by a pair of perpendicular walls 36. The recesses 34 on adjacent chamber elements 12 as shown in Fig. 2 define a rectangular recess 38 facing into the chamber 10 at each corner, extending at 45° to the inner walls 18. As shown in Fig. 2 two of the opposite rectangular recesses 38 in the top most layer 16 locate a locking member 40 in the form of a steel strip with a central hole 42 therein.

Each end wall 24 includes formations to prevent sliding movement adjacent chamber elements 12. The formations include a V-shaped projection 44 and corresponding slot 46 on each end wall 24, located opposite corresponding projections 44 and slots 46 on the end wall 24 of an adjacent chamber element 12.

The cover 14 is of a size to substantially close the top of the chamber 10, and has an inner step 48 which locates against the step 20 on the top layer 16, such that the top of the cover 14 is substantially flush with the top wall 22 of the top most layer 16. Locking means are provided (not shown) in the form of elongate members which extend below the cover 14 and are slectively lockably engageable with the holes 42 to lock the cover 14 on the chamber elements 12. The locking means may be rotatable by an appropriate tool in a conventional manner, and this feature is not therefore further described.

In use, the four chamber elements 12 are formed into each layer 16. A bolt 50 with a nut 52 and washers 54 is provided at each corner extending through the respective fixing holes 30 to retain the chamber elements 12 together. Each layer 16 is located on a layer below, with the flanges 26 engaging on the steps 20. For the topmost layer 16, the locking members 40 are only provided on this layer 26, and permit the cover 14 to be selectively locked in position. The cover 14 fits with the cover step 48 located on the respective steps 20.

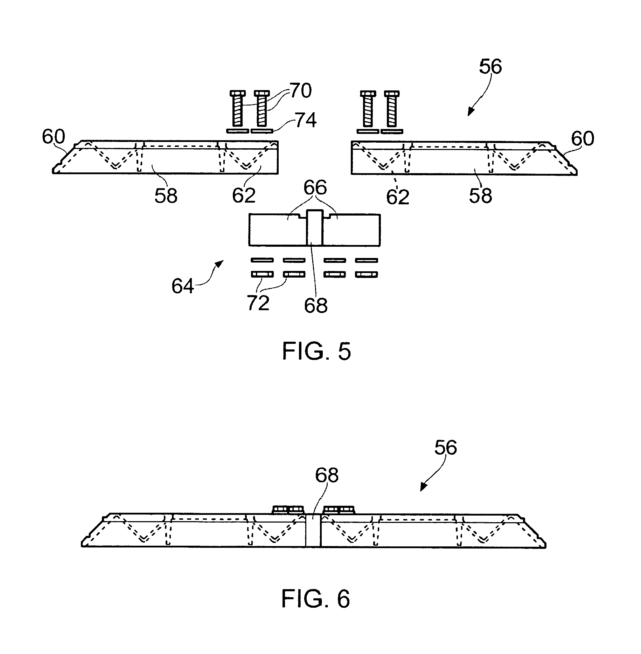

Figs. 5 and 6 show an alternative arrangement where longer chamber elements 56 can be formed. Here the chamber elements 56 include two end parts 58. Each end part 58 has one end wall 60 which is similar to the end wall 24. At the opposite end of the parts 58, a channel 62 is provided which can locate a joining member 64. The joining member 64 has two end parts 66 which are slidably locatable in respective channels on two end parts 58, and a central part 68 of a similar cross sectional size to the chamber elements 12. The end parts 66 can be mounted in the channels 62 by bolts 70 engaging with nuts 72 and washers 74. With such an arrangement chamber elements of any required size can be produced with appropriate length components.

The chamber elements and/or cover may be made from SMC (sheet moulded compound) which consists primarily of a thermosetting resin, glass fibre reinforcements and filler. Additional ingredients may also include low profile additives to modify any potential component distortion or shrinkage, cure initiators, thickeners, process additives and mould release agents to enhance processing/moulding of the material together with pigment stabilisers to affect appearance and weatherability.

A typical composition for the material is as follows:

| **Raw Material** | **% Weight** | **% Volume** |
|---|---|---|
| Thermosetting Polyester resin | 15-30 | 30-45 |
| Glass Fibre | 15-50 | 10-40 |
| Filler | 15-50 | 10-40 |
| All other | 3-10 | 5-15 |

The properties of the material are preferably as follows:

| **SMC Material Formulation** | **∼25% GF Mechanical Properties** |
|---|---|
| Tensile Strength | 65-80 Mpa |
| Tensile Modulus | 8.5-12.5 Gpa |
| Tensile Failure Strain | 1.30% |
| Flexural Strength | 155-200 Mpa |
| Flex Modulus | 8.5-14 Mpa |
| Compressive Strength | 183 Mpa |
| Compressive Modulus | 11.7 Gpa |
| Poisons Ration | 0.25 |
| Coefficient of Thermal Expansion | 14-18 x 10E-6/K |
| SG | 1.85-2.00 |

There is thus provided an underground chamber which has many advantages over prior arrangements. The construction of the chamber elements means that no separate frame is required to mount the cover, and accordingly only a small number of different components are required, thereby providing cost savings. Once in situ the chamber elements can be embedded in mortar, which mortar would engage on the outside of the chamber elements to provide strong keying thereof.

Various modifications may be made without departing from the scope of the invention. For instance, different sizes and/or shapes of chamber elements could be used. The cover could take a different form. A different locking arrangement could be employed.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A chamber element for use in constructing an underground chamber, the element comprising an elongate body having an abutment face at an end thereof, for abutting against a face of an adjacent chamber element to make up the chamber or a part of the chamber, the abutment face being angled at about 45° to the length of the chamber element such that when two cooperating chamber elements are placed with their respective abutment faces adjacent to and in contact with one another, the chamber elements lie at 90° to one another, an inner step being provided on the chamber element spaced below the top thereof, the step being configured to be able to receive in respective configurations either one of a formation on a similar chamber element mounted on top of the chamber element, or an edge of a cover member.

2. A chamber element according to claim 1, **characterised in that** an engagement formation is provided on the underside of the chamber element which formation is engageable with the inner step of a chamber element located therebeneath, the engagement formation being configured such that when engaging with the inner step of a chamber element located therebeneath, the underside of the top chamber element sits substantially flat on top of the lower chamber element.

3. A chamber element according to claims 1 or 2, **characterised in that** the chamber element includes a locking formation for receiving a locking member, which locking member is selectively engageable with a cover member to retain same on the chamber element, the locking formation including a recess which is located adjacent the abutment face, and which can receive part of a locking member.

4. A chamber element according to claim 3, **characterised in that** the recess is configured such that a locking member is extendable between recesses in two cooperating chamber elements across the angle between the two cooperating chamber elements, the recess being configured such that a locking member is extendable therefrom substantially perpendicular to the adjacent abutment face.

5. A chamber element according to any of the preceding claims, **characterised in that** the abutment face of the chamber element includes means for resisting sliding movement relative to the adjacent abutment face of a cooperating chamber element, the means including a projection and/or an indentation for engaging a complementary indentation and/or projection on the face of the adjacent chamber element, the face may include a projection and an indentation, for engaging a complementary indentation and projection on the adjacent face, the projection may be in the form of an elongate rib which may be generally triangular in section, with the indentation being of complementary shape, and the abutment face may be generally planar, apart from the projection/indentation.

6. A chamber element according to any of the preceding claims, **characterised in that** the chamber element comprises a top wall and a side wall substantially perpendicular to the top wall, with the abutment face perpendicular to the top wall.

7. A chamber element according to claim 6, **characterised in that** the abutment face is angled to the side wall, and may be angled at 135° to the side wall.

8. A chamber element according to claims 6 or 7, **characterised in that** the chamber element includes a plurality of ribs which extend from the top and side wall, which ribs may extend perpendicularly to the top and side wall, and which ribs may span substantially an entire width of the top wall.

9. A chamber element according to any of the preceding claims, **characterised in that** the chamber element is shaped such that four abutting chamber elements form four or more sides of a generally rectangular chamber layer.

10. A chamber element according to claim 9, **characterised in that** the chamber element is shaped such that a plurality of chamber layers are stackable one on top of another.

11. A chamber element according to any of the preceding claims, **characterised in that** the chamber element comprises a fibre reinforced composite material, and may consist primarily of a thermosetting resin, a glass fibre reinforcement and a filler.

12. A kit of parts for use in constructing an underground chamber, the kit including a plurality of chamber elements according to any of the preceding claims, the kit may further include a plurality of junction elements for joining adjacent chamber elements end-to-end, such that the chamber elements are aligned, and the kit may include a cover member, which cover member is locatable resting on the inner step of the chamber elements.

13. A kit of parts according to claim 12, **characterised in that** the cover member is configured such that when resting on the inner step of the chamber elements, the top of the cover member is substantially flush with the top of the chamber elements.

14. A kit of parts according to claims 12 or 13, **characterised in that** the kit includes one or more locking members locatable in recesses in the chamber elements, the locking member being selectively engageable with the cover member to lock same in a closed position.

15. An underground chamber comprising a plurality of chamber elements according to any of claims 1 to 14, the chamber elements being assembled with their abutment faces adjacent to and abutting one another.
